# EUROPÄISCHE PATENTSCHRIFT

(11) **EP 2 252 851 B1**
(45) Veröffentlichungstag und Bekanntmachung des Hinweises auf die Patenterteilung: **04.01.2012**
(21) Anmeldenummer: 09710758.5
(22) Anmeldetag: 22.01.2009
(51) Int. Cl.: F28F 25/08, B01J 19/32, E05C 19/06

(54) **EINBAUELEMENT EINER EINBAUPACKUNG**
INSTALLATION ELEMENT OF AN INSTALLED PACKING
ÉLÉMENT INCORPORÉ D'UNE GARNITURE INCORPORÉE

(30) Priorität: 12.02.2008 DE 102008008806
(43) Veröffentlichungstag der Anmeldung: 24.11.2010
(73) Patentinhaber: GEA 2H Water Technologies GmbH, 48493 Wettringen (DE)
(72) Erfinder: WOICKE, Nina, 48161 Münster (DE)
(74) Vertreter: Linnemann, Winfried
(86) Internationale Anmeldenummer: PCT/EP2009/000361
(87) Internationale Veröffentlichungsnummer: WO 2009/100808

(56) Entgegenhaltungen:
- EP-A- 1 152 205
- GB-A- 2 008 735
- JP-A- 2 031 927
- JP-A- 6 064 453
- US-A- 4 477 394
- US-A- 4 742 881

## Beschreibung

Die vorliegende Erfindung betrifft ein Einbauelement einer Einbaupackung zum Stoff- und/oder Wärmeaustausch zwischen Gasen und Flüssigkeiten, mit Zapfen und Ausnehmungen zur Verrastung mit mindestens einem weiteren gleichartigen Einbauelement, wobei an den Zapfen jeweils eine oder mehrere Rastschultern ausgebildet sind.

Das Dokument US 4 477 394 A zeigt Einbauelemente der eingangs genannten Art, die mittels Zapfen und Ausnehmungen miteinander zu einer Einbaupackung verbindbar sind. Die Einbauelemente weisen selbst aber nur die Ausnehmungen auf; die Zapfen sind als separate Elemente ausgeführt, die jeweils rastend in zwei deckungsgleiche Ausnehmungen von zwei übereinander liegenden Einbauelementen eingesteckt werden. An den Zapfen sind ferner Rastschultern ausgebildet.

Weitere Einbauelemente sind aus dem Dokument DE 197 33 480 C2 bekannt und dienen im mit weiteren gleichartigen Einbauelementen zusammengesetzten Zustand als so genannte Einbaupackung, die zum Beispiel In einem Nasskühlturm angeordnet ist, um einerseits warmes, zu kühlendes Wasser von oben nach unten durch die Einbaupackung fließen zu lassen und andererseits Kühlluft im Quer- und/ oder Gegenstrom durch diese hindurch zu führen. Dabei besteht jedes Einbauelement aus einem plattenförmigen Körper, der eine gewellte Oberflächenstruktur aufweisen kann, um die Kontaktfläche zwischen Gas und Flüssigkeit zu vergrößern. Zur Verbindung mehrerer Einbauelemente miteinander wird hier vorgeschlagen. dass diese jeweils mit korrespondierenden Zapfen und Ausnehmungen versehen sind, um benachbarte Einbauelemente miteinander zu verrasten. Eine konkrete Ausgestaltung der Ausnehmungen und Zapfen ist lediglich In Figur 7 offenbart, der pilzkopfartige Zapfen entnehmbar sind.

Weiterhin ist aus der DE 42 41 859 A1 ein Einbauelement für einen Wärmetauscher bekannt, das über eine Rastverbindung mit welteren gleichartigen Einbauelementen zu einem Rieselkörper zusammengesetzt werden kann. Gemäß der Figur 3 sind die Zapfen pilzkopfartig ausgebildet und nach Patentanspruch 4 ist das Einbauelement zumindest im Bereich der zu den Zapfen korrespondierenden Löcher elastisch nachglebig. Somit kann der Zapfen leichter in das Loch eingeschoben und durch die Elastizität des Einbauelementmaterials verrastet werden, Aufgrund der in diesem Dokument genannten bevorzugten Dicken des Folienmaterials des Einbauelements von nur 0,2 mm oder 0,4 mm ist diese Elastizität stets gewährleistet. Wird jedoch ein dickeres Material für das Einbauelement gewählt, so kann eine solche Elastizität um ein Loch herum praktisch nicht mehr realisiert werden.

Für die vorliegende Erfindung stellt sich daher die Aufgabe, ein Einbauelement der eingangs genannten Art zu schaffen, das in einfacher Weise und mit geringem Kraftaufwand mit weiteren gleichartigen Einbauelementen zu einer Einbaupackung verrastbar ist, wobei eine einmal hergestellte Verrastung dauerhaft haltbar sein soll.

Die Lösung dieser Aufgabe gelingt erfindungsgemäß bei einem Einbauelement der eingangs genannten Art dadurch, dass den Ausnehmungen jeweils ein oder mehrere Ringspaltabschnitte zugeordnet sind und dass der Ringspaltabschnitt/die Rangspaltabschnitte einerseits und die Rastschulter(n) andererseits so zueinander korrespondierend angeordnet sind, dass jeweils beim Hindurchstecken des Zapfens durch die Ausnehmung mittels der Rastschulter(n) Material in einem Randbereich der Ausnehmung in den Ringspaltabschnitt/die Ringspaltabschnitte verdrängt wird und dass bei vollständig durch die Ausnehmung hindurchgestecktem Zapfen das Material im Randbereich um die Ausnehmung herum wieder in seine Ausgangsposivon zurückkehrt.

Mit der Erfindung wird ein Einbauelement geschaffen, bei dem durch den mindestens einen zusätzlichen Ringspaltabschnitt, der jeder Ausnehmung In dem Einbauelement zugeordnet ist, eine wesentliche Vereinfachung des Zusammensteckens und des Verrastens miteinander erreicht wird. Beim Einführen und Hindurchstecken eines korrespondierend zu der Ausnehmung ausgebildeten Zapfens wird das Material des Einbauelements Im Bereich um die Ausnehmung herum durch den eindringenden Zapfen in den Ringspattabschnitt hinein verdrängt oder ausgelenkt. Auch bei größeren Materialdlcken, z.B. 1 bis 3 mm, Ist dafür kein besonders großer Kraftaufwand erforderlich. Der Ringspaltabschnitt ist zweckmäßig und somit technisch einfach durch eine Lücke im Material des Einbauelements gebildet. Zur Verrastung des Zapfens in der Ausnehmung ist an diesem mindestens eine Rastschulter ausgebildet. Beim Einführen des Zapfens in die Ausnehmung wird durch diese Rastschulter das Material im Randbereich der Ausnehmung in radialer Richtung gesehen nach außen hin in den Ringspaltabschnitt hinein verdrängt. Ist der Zapfen weit genug in die Ausnehmung eingeführt, so kommt eine Anlagefläche der Rastschulter an einer der Einführseite des Zapfens in das Einbauelement gegenüberliegenden Oberfläche zur Anlage. Gleichzeitig kann das Material um die Ausnehmung herum wieder seine ursprüngliche Form annehmen, da es nicht mehr durch die Rastschulter verdrängt wird, die in radialer Richtung gesehen über einen beispielsweise schaftartig ausgeformten Zapfenbereich übersteht.

Es versteht sich, dass Größe und Formgebung des Ringspaltabschnitts auf Größe und Formgebung der Ausnehmung und des korrespondierenden Zapfens abgestimmt sind. Beispielsweise wird bei einem im Wesentlichen kegelförmigen oder pilzkopfartigen Zapfen der Ringspaltabschnitt bevorzugt als Kreisbogenabschnitt ausbildet sein, um eine gleichmäßige Materialverdrängung im Randbereich der Ausnehmung zu gewährleisten. Selbstverständlich können an einem Einbauelement jeweils mehrere derartige Zapfen und/oder Ausnehmungen mit einem Ringspaltabschnitt vorhanden sein, um z.B. ein großflächiges Einbauelement mit einem weiteren Einbauslement an mehreren Punkten zu verbinden.

Als Materialien für derartige Einbauelemente werden üblicherweise Kunststoffe, wie Polyethylen oder Polypropylen, verwendet, so dass bei der Herstellung eines Einbauelements derartige zusätzliche Ringspaltabschnitte im Bereich der Ausnehmungen problemlos ausgebildet werden können. Dabei verfügen derartige Kunststoffmaterialien auch über eine ausreichende Elastizität, um zum einen beim Hindurchführen des Zapfens durch die Ausnehmung ein Zurückweichen des umgebenden Materials des Einbauelements in den Ringspaltabschnitt hinein zu ermöglichen und zum anderen nach dem Hindurchstecken auch wieder das Zurückstellen dieses Materials in die Ausgangslage zu gewährleisten.

Besonders bei größeren Materialstärken des Einbauelements, beispielsweise mehrere Millimeter, ist es durch diese zusätzlichen Ringspaltabschnitte überhaupt erst möglich, pilzkopfartige Zapfen in korrespondierende Ausnehmungen einzuführen und durchzustecken, so dass stabile, belastbare Einbaupackungen in einfacher Weise erhalten werden können.

In einer bevorzugten Ausgestaltung weist das Einbauelement an jeder Ausnehmung mehrere Ringspaltabschnitte auf, die auf einer gemeinsamen Kreislinie um die Ausnehmung herum konzentrisch und symmetrisch angeordnet sind. Beispielsweise können zwei einander gegenüberliegende Kreisbogenabschnitte um die Ausnehmung herum vorgesehen sein. Ebenso können es drei oder vier Ringspaltabschnitte sein, die äquidistant zueinander angeordnet sind.

Vorzugsweise sind mehrere Rastschutern symmetrisch am Zapfen angeordnet. Beispielsweise können zwei einander gegenüberliegende Rastschultern an den Zapfen ausgebildet sein. Es können auch drei oder vier Rastschultem vorgesehen werden.

Zur Erhöhung der Stabilität einer Einbaupackung, die aus mehreren miteinander verrasteten Einbauelementen zusammengesetzt ist, und um den Zusammenhalt von Einbauelementen zu erhöhen, können im Einbauelement zusätzilche Durchbrechungen ausgebildet sein, die in der aus mehreren miteinander verbundenen Einbauelementen gebildeten Einbaupackung eine fluchtende Anordnung bilden. Durch diese Durchbrechungen hindurch kann ein stangen- oder rohrartiger Anker aus Kunststoff oder Metall hindurchgeführt werden, wobei die äußeren Lagen der Einbaupackung mittels an sich bekannter Haltemittel am Anker zusammengehalten oder zusammengepresst werden können.

Insbesondere zwecks einer kostengünstigen Herstellbarkeit und guten Dauerhaltbarkeit ist bevorzugt das Einbauelement eine als Spritzgussteil aus Kunststoff einstückig hergestellte Gittermatte oder Wellplatte.

Ein Ausführungsbeispiel der Erfindung wird im Folgenden anhand einer Zeichnung näher erläutert. Die Figuren der Zeichnung zeigen:
- Figur 1: einen Ausschnitt aus einem Einbauelement mit einem Zapfen vor dem Einführen in eine zugehörige Ausnehmung eines weiteren Einbauelements, In perspektivischer Ansicht, und
- Figur 2: den in der Ausnehmung verrasteten Zapfen, im Schnitt.

Einbauelemente 1, die bevorzugt aus einem hierfür geeigneten Kunststoff bestehen, werden mit Zapfen 2 und korrespondierenden Ausnehmungen 3 miteinander verrastet, um beispielsweise eine Einbaupackung für einen Kühlturm zu bilden. Derartige Einbauelemente 1, beispielsweise in Form einer Gittermatte, sind aus dem oben zitierten Stand der Technik bekannt. Die Zapfen 2 können dabei entweder einstückig mit dem Einbauelement 1 bei dessen Herstellung gemeinsam mit diesem ausgebildet sein oder nachträglich mit einem Fußelement an das Einbauelement angeklebt oder angeschweißt sein.

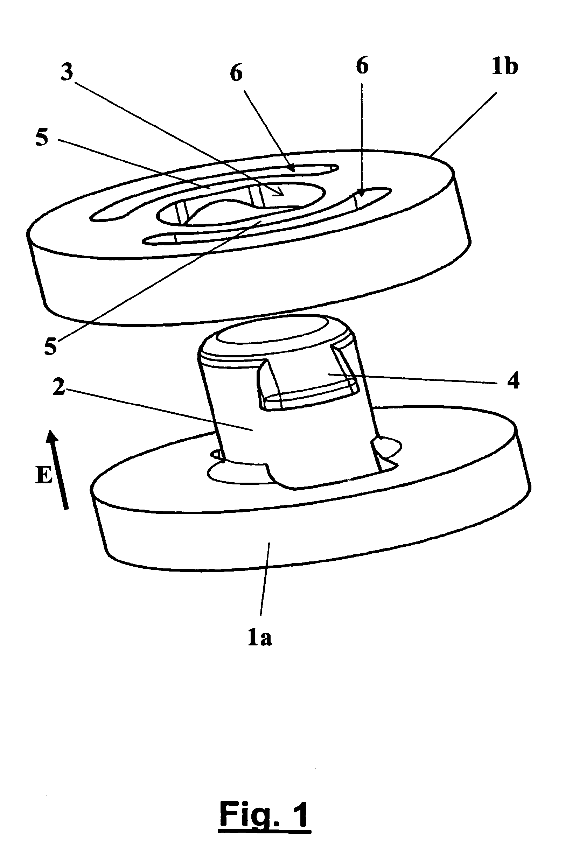

Die Figur 1 der Zeichnung zeigt in perspektivischer Darstellung einen Zapfen 2 eines Einbauelements 1a. der in einer Einführrichtung, wie durch den Pfeil E angedeutet, in eine korrespondierende Ausnehmung 3 eines weiteren gleichartig aufgebauten Einbauelements 1 b eingeführt wird.

An dem Zapfen 2 sind zwei einander gegenüberliegende Rastschultem 4 ausgebildet. Beim Hindurchstecken des Zapfens 2 durch die Ausnehmung 3 verdrängen die Rastschuitem 4 das Material im Randbereich 5 der Ausnehmung 3 in die beiden einander gegenüberliegenden kreisbogenförmigen Ringspaltabschnitte 6 hinein. Hierzu verfügt das Material des Einbauelements 1 über eine ausreichende Flexibilität.

Prinzipiell kann das hier als Einbauelement 1a bezeichnete Bauteil auch ein Fußelement sein, das seinerseits an einem Einbauelement 1 beispielsweise angeschweißt wird.

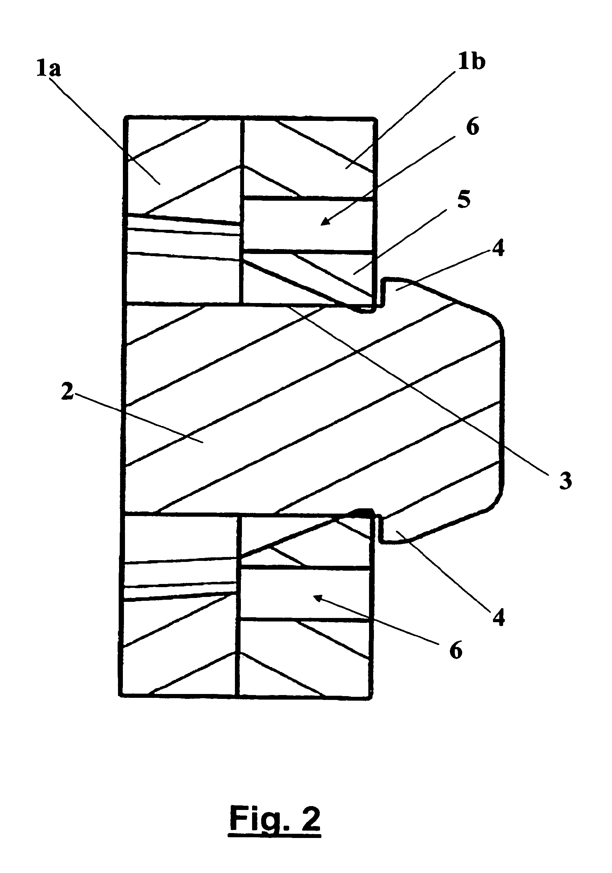

In Figur 2 ist der vollständig durch die Ausnehmung 3 hindurchgesteckte Zapfen 2 des ersten Einbauelements 1a dargestellt. Im Einbauelement 1 b ist das Material im Randbereich 5 um die Ausnehmung 3 herum wieder in seine Ausgangsposition zurückgekehrt, so dass die Ringspaltabschnitte 6 ebenfalls wieder im ursprünglichen Maß vorhanden sind. Aufgrund des größeren Durchmessers der Rastschultem 4 gegenüber der Ausnehmung 3 kommen die Rastschultern 4 zur Anlage an die Oberfläche des Materials im Randbereich 5 um die Ausnehmung 3 In dem Einbauelement 1b herum. Ein unerwünschtes selbsttätiges Zurückziehen des Zapfens 2 aus der Ausnehmung 3 ist so praktisch ausgeschlossen.

### Bezugszeichnliste:

| Zeichen | Bezeichnung |
|---|---|
| 1, 1a, 1b | Einbauelemente |
| 2 | Zapfen |
| 3 | Ausnehmung |
| 4 | Rastschulter |
| 5 | Randbereich |
| 6 | Ringspaltabschnitt |
| 7 | Materialausnehmung |
| E | Einführrichtung |

## Patentansprüche

1. Einbauelement (1) einer Einbaupackung zum Stoff- und/oder Wärmeaustausch zwischen Gasen und Flüssigkeiten, mit Zapfen (2) und Ausnehmungen (3) zur Verrastung mit mindestens einem weiteren gleichartigen Einbauelement (1), wobei an den Zapfen (2) jeweils eine oder mehrere Rastschultem (4) ausgebildet sind,
**dadurch gekennzeichnet,**
**dass** den Ausnehmungen (3) jeweils ein oder mehrere Ringspaltabschnitte (6) zugeordnet sind und
**dass** der Ringspaltabschnitt/die Rangspaltabschnitte (6) einerseits und die Rastschutter(n) (4) andererseits so zueinander korrespondierend angeordnet sind, dass jeweils beim Hindurchstecken des Zapfens (2) durch die Ausnehmung (3) mittels der Rastschulter(n) (4) Material In einem Randbereich (5) der Ausnehmung (3) in den Ringspaltabschnitt/die Ringspaltabschnitte (6) verdrängt wird und dass bei vollständig durch die Ausnehmung (3) hindurchgestecktem Zapfen (2) das Material im Randbereich (5) um die Ausnehmung (3) herum wieder in seine Ausgangsposition zurückkehrt.

2. Einbauelement nach Anspruch 1, **dadurch gekennzeichnet, dass** die Ringspaltabschnitte (6) auf einer gemeinsamen Kreislinie um die Ausnehmung (3) herum konzentrisch und symmetrisch angeordnet sind.

3. Einbauelement nach Anspruch 1 oder 2, **dadurch gekennzeichnet, dass** die Rastschultern (4) symmetrisch am Zapfen (2) angeordnet sind.

4. Einbauelement nach einem der Ansprüche 1 bis 3, **dadurch gekennzeichnet, dass** im Einbauelement (1) zusätzliche Durchbrechungen ausgebildet sind, die in der aus mehreren miteinander verbundenen Einbauelementen (1) gebildeten Einbaupackung eine fluchtende Anordnung bilden.

5. Einbauelement nach einem der Ansprüche 1 bis 4, **dadurch gekennzeichnet, dass** es eine als Spritzgussteil aus Kunststoff einstückig hergestellte Gittermatte oder Wellplatte ist.

## Claims

1. A built-in element (1) of a built-in packing for substance and/or heat exchange between gases and liquids, with pins (2) and recesses (3) for engagement with at least one further built-in element (1) of the same kind, wherein one or a plurality of latching shoulders (4) are formed on each of the pins (2),
**characterized in that**
one or a plurality of annular gap sections (6) are assigned to each of the recesses (3), and
that the annular gap section/the annular gap sections (6) on the one hand and the latching shoulder(s) (4) on the other hand are arranged corresponding to each other such that, whenever the pin (2) is pushed through the recess (3), material in an edge region (5) of the recess (3) is displaced into the annular gap section/the annular gap sections (6) by means of the latching shoulder(s) (4) and that, once the pin (2) has been completely pushed through the recess (3), the material in the edge region (5) around the recess (3) returns to its initial position.

2. The built-in element according to Claim 1, **characterized in that** the annular gap sections (6) are arranged concentrically and symmetrically around the recess (3) on a common circular line.

3. The built-in element according to Claim 1 or 2, **characterized in that** the latching shoulders (4) are arranged symmetrically on the pin (2).

4. The built-in element according to any one of Claims 1 to 3, **characterized in that** additional through holes are formed in the built-in element (1), said through holes forming a flush arrangement in the built-in packing that is formed from a plurality of built-in elements (1) that are connected to each other.

5. The built-in element according to any one of Claims 1 to 4, **characterized in that** it is a grid mat or a corrugated sheet which is an injection-molded part that is made from plastic in a single piece.

## Revendications

1. Élément incorporé (1) d' une garniture incorporée pour le transfert de matière et/ou de chaleur entre des gaz et des liquides, présentant des tenons (2) et des évidements (3) permettant l' enclenchement avec au moins un autre élément incorporé (1) de même type, une ou plusieurs épaules d' enclenchement (4) étant formées sur chacun des tenons (2),
**caractérisé en ce**
**qu'** une ou plusieurs sections de fente annulaire (6) sont affectées à chacun des évidements (3), et
**que** la/les section(s) de fente annulaire (6) d' un côté et l' épaule / les épaules d' enclenchement (4) de l' autre côté sont disposées de manière à correspondre entre elles de telle sorte qu' à chaque introduction du tenon (2) à travers l' évidement (3) de la matière dans une zone de bord (5) de l' évidement (3) est poussée dans la (les) section(s) de fente annulaire (6) au moyen de l' épaule (des épaules) d' enclenchement (4), et que la matière dans la zone de bord (5) autour de l'évidement (3) retourne dans sa position initiale lorsque le tenon (2) est complètement introduit à travers l' évidement (3).

2. Élément incorporé selon la revendication 1, **caractérisé en ce que** les sections de fente annulaire (6) sont disposées de manière concentrique et symétrique sur une ligne circulaire commune autour de l' évidement (3).

3. Élément incorporé selon la revendication 1 ou 2, **caractérisé en ce que** les épaules d' enclenchement (4) sont disposées symétriquement sur le tenon (2).

4. Élément incorporé selon l'une des revendications 1 à 3, **caractérisé en ce que** des ouvertures supplémentaires sont formées dans l' élément incorporé (1), lesquelles forment une disposition alignée dans la garniture incorporée formée de plusieurs éléments incorporés (1) reliés entre eux.

5. Élément incorporé selon l' une des revendications 1 à 4, **caractérisé en ce qu'** il s' agit d' un grillage en treillis ou d' une plaque ondulée fabriqué(e) en une partie sous forme de pièce moulée par injection en plastique.
